(19)

Europäisches
Patentamt
European
Patent Office
Office européen
des brevets

(11) **EP 3 486 611 A1**

(12) **EUROPEAN PATENT APPLICATION**

(43) Date of publication:
**22.05.2019 Bulletin 2019/21**

(21) Application number: **17202488.7**

(22) Date of filing: **20.11.2017**

(51) Int Cl.:
**G01C 21/20** (2006.01)  **G08G 5/00** (2006.01)
**G08G 5/04** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Robert Bosch GmbH
70442 Stuttgart (DE)**

(72) Inventors:
• **PHAN, Huu-Thanh
64283 Darmstadt (DE)**
• **DE VRIES, Jorik
5623 MP Eindhoven (NL)**

(74) Representative: **Thürer, Andreas
Bosch Rexroth AG
DC/IPR
Zum Eisengiesser 1
97816 Lohr am Main (DE)**

(54) **METHOD FOR GENERATING A TRAJECTORY**

(57)     The invention relates to a method for generating
a trajectory from a starting point to a target point based
on predetermined sample points of an initial trajectory
from the starting point to the target point and based on
at least one predetermined constraint, which the trajectory is required to satisfy. The method comprises the
steps:
a) Calculating (104) traveling time intervals for traveling
between the sample points, wherein each traveling time
interval is associated with one of the sample points;
b) Calculating (106) a spline parameter for each sample
point based on the respective traveling time interval;
c) Checking (108), whether each of the traveling time
intervals and its associated spline parameter satisfy the
at least one constraint;
d) If at least one of the traveling time intervals and its
associated spline parameter do not satisfy the constraint,
modifying (110) the respective traveling time interval and
recalculating (112) the associated spline parameter
based on the modified traveling time interval;
e) Providing (114) the traveling time intervals and the
spline parameters for calculating a trajectory.
    The invention further relates to a processing unit, a
control unit for a displacement device, a displacement
device, a computer program and a machine readable data storage.

**Fig. 1**

## Description

The present invention relates to a method for generating a trajectory from a starting point to a target point based on predetermined sample points of an initial trajectory from the starting point to the target point and based on at least one predetermined constraint. Furthermore, the invention relates to a processing unit, a control unit for a displacement device configured to carry out the method according to the invention. The invention is related to the field of displacement devices and of generating trajectories by means of a control unit for moving the displacement device and/or a transport system, in particular of planar displacement systems.

Background of the Invention

Displacement devices, such as transport systems, typically use trajectory generation algorithms to provide trajectories for moving objects or parts of the displacement device from a starting point to a target point.

The productivity of a transport system can be increased by decreasing the time of the trans-portations. However, a path for a trajectory being considered as optimal does not necessarily have to result in a time-optimal trajectory. Instead, a different path or trajectory requiring a longer traveling time and/or a longer distance may be preferred because of a limited amount of acceleration and/or jerk occurring in the displacement system. Regularly, in order to obtain such a time-optimal solution, different paths and/or trajectories have to be compared in order to retrieve an optimal solution.

Some implementations are known in prior art, which are capable of generating a trajectory with acceptable computational effort, but there are unable to account for higher order constraints, such as jerk constraints. Such implementations are disclosed for instance in C. Sprunk: "Highly accurate mobile robot navigation" (2015) and C. Sprunk, B. Lau, P. Pfaff and W. Burgard: "An accurate and efficient navigation system for omnidirectional robots in industrial environments," Autonomous Robots (2016).

Other implementations known in prior art using high dimensional search algorithms are in principle capable of accounting for higher order constraints, but suffer from requiring a very high computational effort. Such implementations are for instance disclosed in D. J. Webb and J. v. d. Berg: "Kinodynamic RRT*: Asymptotically optimal motion planning for robots with linear dynamics," IEEE International Conference on Robotics and Automation (2013).

Therefore, the trajectory generation algorithms either demand a high computational effort and, thus, require a large computing power and/or require a long computation time or are simply not capable of accounting for higher order constraints.

Hence, it is the objective technical problem of the invention to provide a method for generating a trajectory capable of accounting for higher order constraints while requiring only moderate computational effort.

Disclosure of the invention

According to the invention, a method, a processing unit, a control unit for a displacement device, a computer program and a machine readable data storage having the features of the respective independent claim are proposed. Preferred embodiments are subject-matter of the dependent claims and the following description.

In a first aspect the invention relates to a method for generating a trajectory from a starting point to a target point based on predetermined sample points of an initial trajectory from the starting point to the target point and based on at least one predetermined constraint, which the trajectory is required to satisfy. The method comprises the following steps:

a) Calculating traveling time intervals for traveling between the sample points, wherein each traveling time interval is associated with one of the sample points;
b) Calculating a spline parameter for each sample point based on the respective traveling time interval;
c) Checking, whether each of the traveling time intervals and its associated spline parameter satisfy the at least one constraint;
d) If at least one of the traveling time intervals and its associated spline parameter do not satisfy the constraint, modifying the respective traveling time interval and recalculating the associated spline parameter based on the modified traveling time interval;
e) Providing the traveling time intervals and the spline parameters for calculating a trajectory.

In another aspect the invention relates to a processing unit configured to carry out a method according to the invention, and to a control unit for a displacement device comprising such a processing unit.

In another aspect the invention relates to a displacement device comprising a control unit according to the invention. The displacement device is preferably configured as a transport system, most preferably as a planar motion system.

A trajectory is to be understood as a path along which for instance a movement is to be carried out, for example by a displacement device and/or a tool. The predetermined sample points may at least partially define an initial trajectory. The at least one constraint may be predetermined and may define one or more requirements, which the trajectory has to satisfy to allow a reliable tracking of the movement and/or a sustainable operation of the displacement device. The at least one predetermined constraint may be retrieved by the system and/or for instance may be provided by a user input and/or retrieved from a data storage. Optionally, the at least one constraint comprises a maximum velocity and/or a maximum acceleration and/or a maximum jerk occurring when traveling along the trajectory. Preferably, the at least one constraint may also comprise information about possible obstacles which need to be considered when generating the trajectory.

A spline is a mathematical function or curve, which is built-up from one or more polynomial functions. In particular a spline can comprise several spline segments, wherein according to the present invention preferably each sample point and/or each traveling time interval is associated with one spline defined by a polynomial function segment and wherein all these spline segments together form a spline. A spline of n-th order comprises only spline segments, which are defined of a polynomial of maximum n-th order. Furthermore, requirements may be defined, in particular at the contact points at which adjacent spline segments are meeting each other, according to which the spline shall be continuously differentiable at least (n-1) times. In particular, a spline segment is defined by a coordinate, which is according to the present invention the at least one coordinate of the sample point, a spline parameter and the distance between adjacent sample points. In particular, the coordinate of the spline, i.e. the sample point, is preferably defined by a pair of coordinates in two-dimensional space, for instance by an x-coordinate and a y-coordinate, which allows generating a two-dimensional trajectory in the two-dimensional space. For generating a trajectory in a three-dimensional space, the sample point may be defined by a triple of coordinates, such as an x-, a y- and a z-coordinate. Preferably, the spline is configured as a cubic spline.

The traveling time intervals for traveling between the sample points are defined as the respective time intervals, which are required for traveling from one sample point to the next sample point. The traveling time intervals may have the same time duration or may be of different time durations. The total traveling time for the trajectory preferably equals the sum of the traveling time intervals between the sample points from the starting point to the target point. The starting point and/or the target point may also be considered as sample points.

The invention provides the advantage that it allows generating and/or optimizing a trajectory based on very few variables to be varied as compared to conventional methods. In particular the use of a spline for calculating the trajectory facilitates the generation of the trajectory and by this reduces the required computational effort for generating the trajectory. Consequently, the invention allows the generation of the trajectory to be carried out with moderate computational hardware and/or at a high computation speed and/or allows carrying out several computations in parallel.

Furthermore, the invention provides the advantage that it provides a trajectory without noncontinuous velocities or accelerations when traveling the trajectory. By this, the tracking errors can be significantly reduced, which increases the quality and reliability of the trajectory and the operation of a displacement system carrying out a movement according to such a trajectory.

In addition the invention provides the advantage, that accelerations and/or jerks occurring when traveling along the trajectory can be reduced, which reduces the mechanical strain to the displacement system carrying out the movement along the trajectory. Therefore, the invention enhances the lifetime and/or reduces the required maintenance to a displacement system using the invention.

Preferably, modifying the respective traveling interval comprises extending the time duration of the respective traveling time interval. This provides the advantage that the average traveling time for the respective traveling time interval can be reduced and, thus, the occurring accelerations and/or jerks may be reduced. This might lead to a trajectory fulfilling the constraints.

Preferably, the trajectory satisfies the at least one constraint if all the traveling time intervals and the associated spline parameters satisfy the at least one constraint. In other words, all individual traveling time intervals are checked for satisfying the at least one constraint. If this is the case, also the whole trajectory comprising and/or consisting of all the individual traveling time intervals fulfils the at least one constraint. This allows a stepwise generation and/or optimization of the trajectory.

Preferably, at least the steps c) and d) are repeated at least once. More preferably, at least these steps are carried out in an iterative manner. Most preferably at least the steps c) and d) are repeated until all traveling time intervals and their associated spline parameters satisfy the at least one constraint and/or until a predetermined maximum planning time has elapsed. This allows a converging approach for generating the trajectory satisfying the at least one constraint.

It should be noted that the previously mentioned features and the features to be further described in the following are usable not only in the respectively indicated combination, but also in further combinations or taken alone, without departing from the scope of the present invention.

In the drawings:

Figure 1 exemplarily shows in a flow diagram an outline of a method for generating a trajectory according to a preferred embodiment.

Figure 2 schematically shows a hardware- and software layout of a control unit or a processing unit according a preferred embodiment.

Detailed description of the Figures

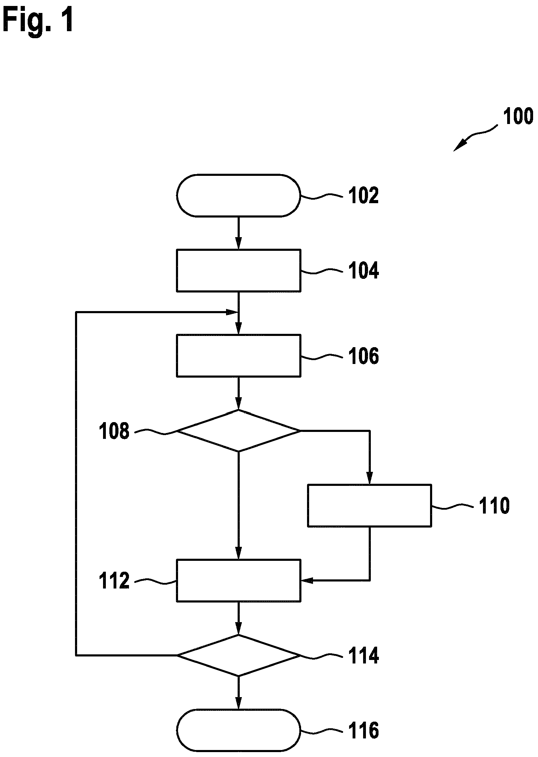

Figure 1 exemplarily shows in a flow diagram 100 an outline of a method for generating a trajectory according to a preferred embodiment. In a first step 102 several input parameters are provided, which according to this preferred embodiment comprise a starting point, a target point, several sample points from the starting point to the target point and at least one constraint. The at least one constraint comprises a maximum velocity and as higher order constraints a maximum acceleration and maximum jerk, which may not be exceeded when traveling along the trajectory.

In step 104 an initialization is carried out comprising the calculation of traveling time intervals for traveling between the sample points. Each of the traveling time intervals extends between two of the sample points.

In step 106 a spline is generated by calculating a spline parameter for each of the traveling time intervals. According to the preferred embodiment, the spline is generated as a cubic spline, wherein the spline is generated on the basis of the respective sample point to which it is associated, a spline parameter, which is calculated, and the traveling time interval associated to the respective sample point.

Afterwards, in step 108 a check is carried out, whether each of the traveling time intervals and their associated splines and/or spline parameters satisfy the at least one constraint. In particular, this check includes calculating the maximum velocity and/or the maximum acceleration and/or the maximum jerk occurring in each traveling time interval for each spline associated with a sample point and compares the respective value to the maximum velocity and/or maximum acceleration and/or maximum jerk set by the predetermined constraint.

For those traveling time intervals, which do not satisfy the at least one constraint, i.e. in which the maximum velocity and/or the maximum acceleration and/or the maximum jerk set by the predetermined constraint, is exceeded, the traveling time interval is extended, i.e. increased or prolonged. The other traveling time intervals, which do satisfy the predetermined constraint, may remain unchanged.

Afterwards, in step 112 the spline parameters are recalculated under consideration of the modified traveling time intervals.

A further check, whether all traveling time intervals satisfy the predetermined constraint is carried out in step 114. If this is not the case, i.e. if at least one of the traveling time intervals does still not satisfy the at least one constraint, the steps 106 to 114 are repeated in an iterative loop, until all traveling time intervals do satisfy the constraint.

When all traveling time intervals satisfy the constraint, the splines and/or spline parameters, the traveling time intervals and optionally the sample points are output (step 116). Based on this output, for instance a setpoint generator can generate a trajectory.

In the following, an exemplary program code is presented, which may result in a method according to the preferred embodiment described above. In this program code, the parameter **h** denotes a vector of the traveling time intervals, **Q** a list or a vector of sample points, such as sample points, wherein the components of the vector represent the coordinates or coordinate pairs (for example its x- and y- coordinates in a 2D-space) or coordinate triples of the individual sample points **q,** $v_{max}$ the 0maximum velocity, $a_{max}$ the maximum acceleration, $j_{max}$ the maximum jerk (each defined by the predetermined constraint), the vector **M** the spline parameter, which will be discussed in detail further below, and Ns denotes the number of spline segments or sample points or number of traveling time intervals.

**Algorithm :** Determining the traveling time intervals $\boldsymbol{h} = \{h_1, h_2, \ldots, h_{N_s}\}$

**Input:** A list of sample points: $\boldsymbol{Q} = \{\boldsymbol{q}_0, \boldsymbol{q}_1, \ldots, \boldsymbol{q}_{N_s}\}$, the constraints $v_{max}$, $a_{max}$, $j_{max}$.

**Output:** The time intervals $\boldsymbol{h}$, and the spline coefficients

$$\boldsymbol{M} = \{\boldsymbol{M}_{0,\xi}, \boldsymbol{M}_{1,\xi}, \ldots, \boldsymbol{M}_{N_s,\xi}\},$$

**Initialization:**

$$h_1 = \max_{\xi \in \{x,y\}} \left\lceil \left(\frac{3}{2} - \frac{v_{0,\xi} \operatorname{sign}(q_{1,\xi} - q_{0,\xi})}{2\, v_{max}}\right) \frac{|q_{1,\xi} - q_{0,\xi}|}{v_{max}\, T_s} \right\rceil T_s;$$

$$h_k = \max_{\xi \in \{x,y\}} \left\lceil \frac{|q_{k,\xi} - q_{k-1,\xi}|}{v_{max}\, T_s} \right\rceil T_s, \; \forall\, k \in \{2, \ldots, N_s - 1\};$$

$$h_{N_s} = \max_{\xi \in \{x,y\}} \left\lceil \frac{3|q_{N_s,\xi} - q_{N_s-1,\xi}|}{3 v_{max}\, T_s} \right\rceil T_s \; ;$$

$$\boldsymbol{M}_\xi = \boldsymbol{A}^{-1}\, \boldsymbol{d}_\xi \,; \forall\, \xi \in \{x, y\};$$

**Repeat**

    **for all** $k = 1:1:N_s$ **do**

        **if** ( $(\max\, |\dot{q}_\xi(t)| > v_{max})$ or $(\max\, |\ddot{q}_\xi(t)| > a_{max})$ or

        $(\max\, |\dddot{q}_\xi(t)| > j_{max})$) $h_k = h_k + T_s;$

        **end if**

    **end for**

$$\boldsymbol{M}_\xi = \boldsymbol{A}^{-1}\, \boldsymbol{d}_\xi \,; \forall\, \xi \in \{x, y\};$$

**until** ( $(\max\, |\dot{q}_\xi(t)| \le v_{max})$ and $(\max\, |\ddot{q}_\xi(t)| \le a_{max})$ and

$(\max\, |\dddot{q}_\xi(t)| \le j_{max})$)

The function $q_\xi(t)$ is defined for the different time ranges and traveling time intervals as follows:

$$q_\xi(t) = M_{k-1,\xi} \frac{(t_k-t)^3}{6\,h_k} + ( q_{k-1,\xi} - M_{k-1,\xi} \frac{h_k^2}{6})\frac{(t_k-t)}{h_k}$$

$$+ M_{k,\xi} \frac{(t-t_{k-1})^3}{6\,h_k} + ( q_{k,\xi} - M_{k,\xi} \frac{h_k^2}{6})\frac{(t-t_{k-1})}{h_k}$$

for the time interval

$$t_k \leq t \leq t_{k+1}$$

and

$$h_k := t_{k+1} - t_k$$

The first and last segment are quintic spline of the time parameter, which are

$$q_\xi(t) = M_{k-1,\xi} \frac{(t_k-t)^3}{6\,h_k} + ( q_{k-1,\xi} - M_{k-1,\xi} \frac{h_k^2}{6})\frac{(t_k-t)}{h_k}$$

$$+ M_{k,\xi} \frac{(t-t_{k-1})^3}{6\,h_k} + ( q_{k,\xi} - M_{k,\xi} \frac{h_k^2}{6})\frac{(t-t_{k-1})}{h_k}$$

$$- (M_{k-1,\xi} - a_{0,\xi}) \frac{t^2(t_1-t)^3}{2\,h_1^3}$$

for the time interval

$$0 \leq t \leq t_1$$

and

$$q_\xi(t) = M_{k-1,\xi} \frac{(t_k-t)^3}{6\,h_k} + ( q_{k-1,\xi} - M_{k-1,\xi} \frac{h_k^2}{6})\frac{(t_k-t)}{h_k}$$

$$+ M_{k,\xi} \frac{(t-t_{k-1})^3}{6\,h_k} + ( q_{k,\xi} - M_{k,\xi} \frac{h_k^2}{6})\frac{(t-t_{k-1})}{h_k}$$

$$- M_{N_s,\xi} \frac{(t-t_{N_s-1})^3(T-t_{N_s-1})^2}{2\,h_{N_s}^3}$$

for the time interval

$$t_{N_s-1} \leq t \leq T \text{ and } \xi := \{x,y\}.$$

The functions $\dot{q}_\xi(t)$, $\ddot{q}_\xi(t)$ and $\dddot{q}_\xi(t)$, appearing in the program text represent the first, second and third derivative over time, respectively.

In this exemplary program text, a mathematical model according to a preferred embodiment is used for calculating the spline parameters and, hence, generating the trajectory. The spline parameters are calculated based on the condition vector **d,** whose components satisfy the following conditions:

$$d_0 = \frac{6(q_1 - q_0)}{h_1^2} - \frac{6v_0}{h_1}$$

$$d_i = \frac{6}{h_i + h_{i+1}} \left( \frac{q_{i+1} - q_i}{h_{i+1}} - \frac{q_i - q_{i-1}}{h_i} \right)$$

$$d_{N_s} = -\frac{6(q_{N_s} - q_{N_s-1})}{h_{N_s}^2}$$

It is apparent that the condition vector **d** comprises a number Ns of components, i.e. its dimensionality matches the number of spline segments. Each component or dimension of **d** besides 1 and $N_S$ can be derived from $d_i$, when setting the respective number for the lowered parameter "i".

The calculation of the vector **M** of the spline parameters further depends on the matrix **A,** which forms a central part of the algorithm. According to the presently described preferred embodiment, **A** is defined by the following representation:

$$A = \begin{bmatrix} 2 & 1 & 0 & 0 & \cdots & 0 & 0 & 0 & 0 \\ \mu_1 & 2 & 1-\mu_1 & 0 & \cdots & 0 & 0 & 0 & 0 \\ 0 & \mu_2 & 2 & 1-\mu_2 & \cdots & 0 & 0 & 0 & 0 \\ 0 & 0 & \mu_3 & 2 & \cdots & 0 & 0 & 0 & 0 \\ \vdots & \vdots & \vdots & \vdots & \ddots & \vdots & \vdots & \vdots & \vdots \\ 0 & 0 & 0 & 0 & \cdots & 2 & 1-\mu_{(N_s-3)} & 0 & 0 \\ 0 & 0 & 0 & 0 & \cdots & \mu_{(N_s-2)} & 2 & 1-\mu_{(N_s-2)} & 0 \\ 0 & 0 & 0 & 0 & \cdots & 0 & \mu_{(N_s-1)} & 2 & 1-\mu_{(N_s-1)} \\ 0 & 0 & 0 & 0 & \cdots & 0 & 0 & 1 & 2 \end{bmatrix}$$

with the vector **μ** and its components being defined by the following relation:

$$\mu_i = \frac{h_i}{h_i + h_{i+1}}$$

The vector **M** of spline parameters is further defined and can be retrieved by solving the following equation:

$$A \begin{bmatrix} M_0 \\ M_1 \\ \vdots \\ M_{(N_s-1)} \\ M_{N_S} \end{bmatrix} = \begin{bmatrix} d_0 \\ d_1 \\ \vdots \\ d_{(N_s-1)} \\ d_{N_S} \end{bmatrix}$$

With this mathematical algorithm and the above-described exemplary program code, a method according to a preferred embodiment can be carried out and spline parameters for generating a trajectory can be provided.

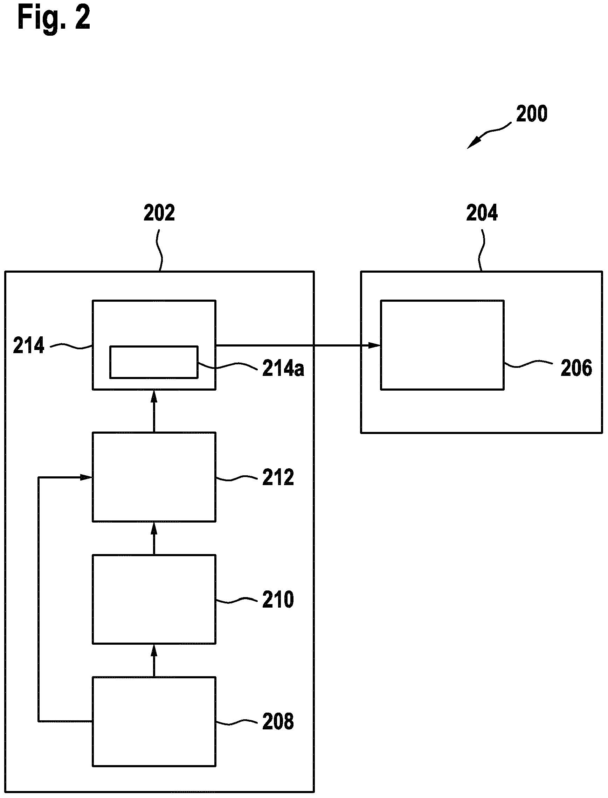

Figure 2 schematically shows a hardware and software layout 200 of a control unit and/or a processing unit according a preferred embodiment. The layout 200 shows a software module 202, which may be operated on a control unit for controlling a connected physical system 204, such as a displacement device and/or a transportation system comprising a mover 206.

The software module 202 includes a system controller 208 which determines and/or provides the start position and/or the target position and/or the at least one constraint, such as positions of obstacles and/or a maximum velocity and/or a maximum acceleration and/or a maximum jerk. The system controller provides the start position and/or the target position and/or the at least one constraint to the geometric path planner 210 for generating a set of initial sample points and also to the trajectory optimization module 212 as an input for the optimization of a trajectory satisfying the at least one constraint based on the set of sample points provided by the geometric path planner 210.

After completing the optimization of the trajectory, the trajectory is output as spline and/or a set of spline parameters to a set point generator 214a within a motion controller system 214, which in turn controls the movement of the mover 206.

**Claims**

1.  Method for generating a trajectory from a starting point to a target point based on predetermined sample points of an initial trajectory from the starting point to the target point and based on at least one predetermined constraint, which the trajectory is required to satisfy, the method comprising the steps:

    a) Calculating (104) traveling time intervals for traveling between the sample points, wherein each traveling time interval is associated with one of the sample points;
    b) Calculating (106) a spline parameter for each sample point based on the respective traveling time interval;
    c) Checking (108), whether each of the traveling time intervals and its associated spline parameter satisfy the at least one constraint;
    d) If at least one of the traveling time intervals and its associated spline parameter do not satisfy the constraint, modifying (110) the respective traveling time interval and recalculating (112) the associated spline parameter based on the modified traveling time interval;
    e) Providing (116) the traveling time intervals and the spline parameters for calculating a trajectory.

2.  Method according to claim 1, wherein the modifying (110) the respective traveling time interval comprises extending the time duration of the respective traveling time interval.

3.  Method according to claim 1 or 2, wherein the trajectory satisfies the at least one constraint if all the traveling time intervals and the associated spline parameters satisfy the at least one constraint.

4.  Method according to any one of the preceding claims, wherein the at least one predetermined constraint comprises a maximum velocity and/or a maximum acceleration and/or a maximum jerk occurring when traveling along the trajectory.

5.  Method according to any one of the preceding claims, wherein at least the steps c) and d) are repeated at least once.

6.  Method according to claim 5, wherein at least the steps c) and d) are repeated until all traveling time intervals and their associated spline parameters satisfy the at least one constraint and/or until a predetermined maximum planning time has elapsed.

7.  Processing unit configured to carry out a method according to any one of the preceding claims.

8.  Control unit for a displacement device, comprising a processing unit according to claim 7.

9.  Displacement device comprising a control unit according to claim 8.

10. Computer program configured to cause a processing unit carrying out a method according to any one of the claims 1 to 6.

11. Machine readable data storage medium having a computer program according to claim 10 stored thereon.

**Fig. 1**

# Fig. 2

200

202                                              204

214

214a

206

212

210

208

Europäisches
Patentamt

European
Patent Office

Office européen
des brevets

# EUROPEAN SEARCH REPORT

Application Number

EP 17 20 2488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALESSANDRO GASPARETTO ET AL: "Trajectory Planning in Robotics", MATHEMATICS IN COMPUTER SCIENCE, SP BIRKHÃ USER VERLAG BASEL, BASEL, vol. 6, no. 3, 30 August 2012 (2012-08-30), pages 269-279, XP035125437, ISSN: 1661-8289, DOI: 10.1007/S11786-012-0123-8 * page 2, lines 17-19 * * page 3, line 44 - page 4, line 2 * * page 5, lines 43-47 * * page 6, lines 5-48 * | 1-11 | INV. G01C21/20 G08G5/00 G08G5/04 |
| A | LAU B ET AL: "Kinodynamic motion planning for mobile robots using splines", INTELLIGENT ROBOTS AND SYSTEMS, 2009. IROS 2009. IEEE/RSJ INTERNATIONAL CONFERENCE ON, IEEE, PISCATAWAY, NJ, USA, 10 October 2009 (2009-10-10), pages 2427-2433, XP031581163, ISBN: 978-1-4244-3803-7 * the whole document * | 1 | |
| A | MOHAMED ELBANHAWI ET AL: "Sampling-Based Robot Motion Planning: A Review", IEEE ACCESS, vol. 2, 24 January 2014 (2014-01-24), pages 56-77, XP055435745, DOI: 10.1109/ACCESS.2014.2302442 * the whole document * | 1 | |
| A | US 2014/163850 A1 (SAWHILL BRUCE K [US] ET AL) 12 June 2014 (2014-06-12) * the whole document * | 1 | |

TECHNICAL FIELDS
SEARCHED (IPC)

G01C
G08G

The present search report has been drawn up for all claims

| Place of search | Date of completion of the search | Examiner |
|---|---|---|
| The Hague | 11 May 2018 | Faivre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 2488

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2018

| Patent document cited in search report | | Publication date | Patent family member(s) | | Publication date |
|---|---|---|---|---|---|
| US 2014163850 | A1 | 12-06-2014 | EP | 2668609 A1 | 04-12-2013 |
| | | | US | 2012191332 A1 | 26-07-2012 |
| | | | US | 2012191333 A1 | 26-07-2012 |
| | | | US | 2014163850 A1 | 12-06-2014 |
| | | | US | 2014188378 A1 | 03-07-2014 |
| | | | US | 2015154873 A1 | 04-06-2015 |
| | | | US | 2018040250 A1 | 08-02-2018 |
| | | | WO | 2012103228 A1 | 02-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. SPRUNK.** *Highly accurate mobile robot navigation,* 2015
- **C. SPRUNK ; B. LAU ; P. PFAFF ; W. BURGARD.** An accurate and efficient navigation system for omnidirectional robots in industrial environments. *Autonomous Robots,* 2016
- **D. J. WEBB ; J. V. D. BERG.** Kinodynamic RRT*: Asymptotically optimal motion planning for robots with linear dynamics. *IEEE International Conference on Robotics and Automation,* 2013